Europäisches Patentamt

**European Patent Office**

**Office européen des brevets**

(19)

(11) Numéro de publication: **0188930**
**B1**

(12)

# FASCICULE DE BREVET EUROPEEN

(45) Date de publication du fascicule du brevet:
18.01.89

(21) Numéro de dépôt: 85402342.1

(22) Date de dépôt: 28.11.85

(51) Int. Cl.⁴: **H 02 K 5/22,** H 02 K 7/14

(54) Dispositif de retenue d'un moteur électrique dans un boîtier.

(30) Priorité: 20.12.84 FR 8419578

(43) Date de publication de la demande:
30.07.86 Bulletin 86/31

(45) Mention de la délivrance du brevet:
18.01.89 Bulletin 89/3

(84) Etats contractants désignés:
DE IT

(56) Documents cités:
FR-A- 1 583 878
FR-A- 2 454 212
FR-A- 2 456 928
FR-A- 2 536 221
GB-A- 2 002 182

(73) Titulaire: VALEO, 64, avenue de la Grande Armée,
F-75848 Paris Cédex 17 (FR)

(72) Inventeur: Loup, Didier, 32, avenue de Limagne,
F-78310 Maurepas (FR)

(74) Mandataire: Ramey, Daniel et al, Cabinet
NETTER 40, rue Vignon, F-75009 Paris (FR)

## Description

L'invention concerne un dispositif de retenue d'un moteur électrique dans un boîtier, applicable en particulier dans le domaine de l'industrie automobile.

Les ventilateurs faisant partie des installations de chauffage et de ventilation ou de climatisation de véhicules automobiles comprennent une roue à aubes ou à pales fixée sur l'arbre d'un moteur électrique et logée dans une volute ou une gaine de circulation d'air présentée par un boîtier qui forme également logement et support du moteur électrique. Ce boîtier comprend, dans sa partie recevant le moteur électrique, des moyens de positionnement et de centrage coopérant avec la cage ou le bâti du moteur. La fixation ou la retenue du moteur dans le boîtier est assurée par des vis engagées dans des trous d'une paroi de fond du boîtier et vissées dans des écrous captifs portés par la cage ou le bâti du moteur.

Ces moyens de fixation du moteur présentent un certain nombre d'inconvénients: leur mise en oeuvre nécessite une opération particulière lors du montage du moteur dans le boîtier, et les vis de fixation transmettent, d'une part, des bruits à l'extérieur du boîtier et, d'autre part, des effort à la cage du moteur. Comme celle-ci est en général en matière plastique, elle subit à la longue une déformation plus ou moins importante, qui est nuisible au fonctionnement correct du moteur. Des dispositifs de montage et de support de moteurs éléctriques sont connus des fascicules de brevet FR-A-2536221, FR-A-2454212, GB-A-2002182.

L'invention a notamment pour but d'éviter ces inconvénients de la technique antérieure, tout en simplifiant les opérations de montage et de fixation du moteur électrique dans le boîtier.

Elle propose à cet effet un dispositif de retenue d'un moteur électrique dans un boîtier, ce moteur comprenant une cage ou un bâti de support du stator et de guidage de l'arbre du moteur, le boîtier comprenant des moyens de centrage et de butée coopérant avec ladite cage pour le positionnement du moteur dans le boîtier, une paroi de ce boîtier comprenant un orifice de passage d'un connecteur propre à être engagé sur deux cosses d'alimentation électrique du moteur qui sont fixées sur ladite cage, caractérisé en ce que le connecteur comprend une patte en saillie propre à être reçue dans une encoche d'une partie de la cage du moteur et qui forme, quand le connecteur est monté sur lesdites cosses à travers l'orifice du boîtier, un organe de retenue du moteur dans le boîtier.

Ainsi, selon l'invention, c'est le connecteur utilisé pour l'alimentation électrique du moteur qui forme également les moyens de retenue ou de fixation du moteur dans le boîtier. Les vis utilisées dans la technique antérieure sont supprimées, ainsi que tous les inconvénients qui découlaient de leur utilisation.

Selon une autre caractéristique de l'invention, le connecteur comprend également deux branches latérales formant crochets et coopérant par clipsage ou encliquetage avec un rebord formé sur ladite paroi du boîtier autour de l'orifice de passage du connecteur, pour fixation du connecteur sur le boîtier.

On évite ainsi un démontage accidentel du connecteur, sans pour autant compliquer les opérations d'assemblage ou de fixation du moteur dans le boîtier.

Selon d'autres caractéristiques de l'invention, l'encoche précitée est formée dans une nervure de la cage du moteur, cette nervure s'étendant dans un plan passant par l'axe de rotation du moteur, l'orifice de passage du connecteur est orienté radialement par rapport à l'axe de rotation du moteur, et la patte précitée du connecteur comprend une face latérale oblique parallèle à un bord oblique de ladite encoche.

On peut ainsi, de façon simple et efficace, assurer un montage correct du connecteur sur le boîtier et la retenue dans le boîtier, malgré les tolérances dimensionelles de fabrication résultant des fabrications en grande série de la cage du moteur, du connecteur et du boîtier.

Par ailleurs, la patte précitée du connecteur est avantageusement formée en saillie sur une face latérale du connecteur, le bord de l'orifice de passage du connecteur comprenant une découpe de forme correspondante qui reçoit cette patte en saillie, de telle sorte que le connecteur ne peut être monté dans ledit orifice que d'une seule façon.

Ainsi, lorsque le moteur électrique est un moteur à courant continu, on évite une inversion de son raccordement à une source de courant continu.

Dans la description qui suit, faite à titre d'exemple, on se réfère aux dessins annexés, dans lesquels:

la figure 1 est une vue schématique en coupe axial d'un moteur électrique logé dans un boîtier;

la figure 2 est une vue schématique en coupe selon la ligne II-II de la ligne 1;

la figure 3 est une vue en plan, à plus grande échelle, d'un connecteur selon l'invention;

la figure 4 est une vue de côté de ce connecteur.

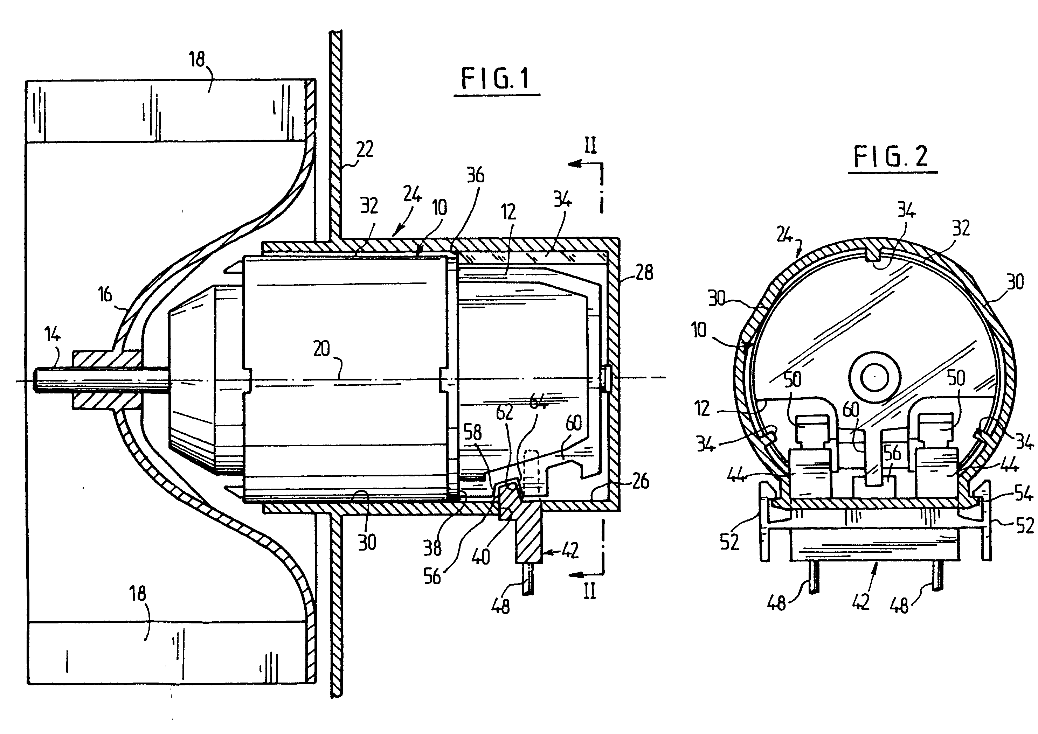

Le moteur électrique 10 représenté dans les figures 1 et 2 comprend, de façon classique, une cage ou un bâti 12 en matière plastique supportant le stator du moteur 10 et formant, à ses extrémités, support et guidage, au moyen de paliers non représentés, de l'arbre 14 du moteur 10 sur lequel est fixé le rotor de ce moteur.

Dans l'exemple représenté, une roue 16 à aubes ou pales 18 est montée, par exemple par emmanchement à force, sur une extrémité de larbre 14, pour être entraînée en rotation autour de l'axe 20 de l'arbre 14 lorsque le moteur est alimenté en courant électrique.

La roue à aubes 16 tourne dans une gaine ou volute 22 de circulation d'air, représentée partiellement en figure 1, et qui est fixée sur un boîtier 24 ou fait partie de celui-ci.

Le boîtier 24 comprend un longement de forme sensiblement cylindrique 26 dont une extrémitée est fermée par une paroi de fond 28 et dont l'autre extrémitée est ouverte pour l'introduction du moteur 10 dans le longement 26.

La surface interne cylindrique de ce longement comprend des méplats 30, par exemple au nombre de trois, répartis à 120° les uns des autres, coopérant avec la surface externe d'une bague cylindrique 32 de la cage ou bâti 12 du moteur, et des nervures longitudinales 34, par exemple au nombre de trois et réparties a 120° les unes des autres, s'étendant depuis la paroi de fond 28 du boîtier sur une distance appropriée, de telle sorte que leur extrémité 36 opposé à la paroi de fond 28 forme une butée sur laquelle s'appuie l'extrémité 38 de la bague 32.

Lors de son introduction dans le longement 26 du boîtier 24, le moteur 10 est centré entre les méplats 30 et poussé en butée sur les extrémités 36 des nervures 34.

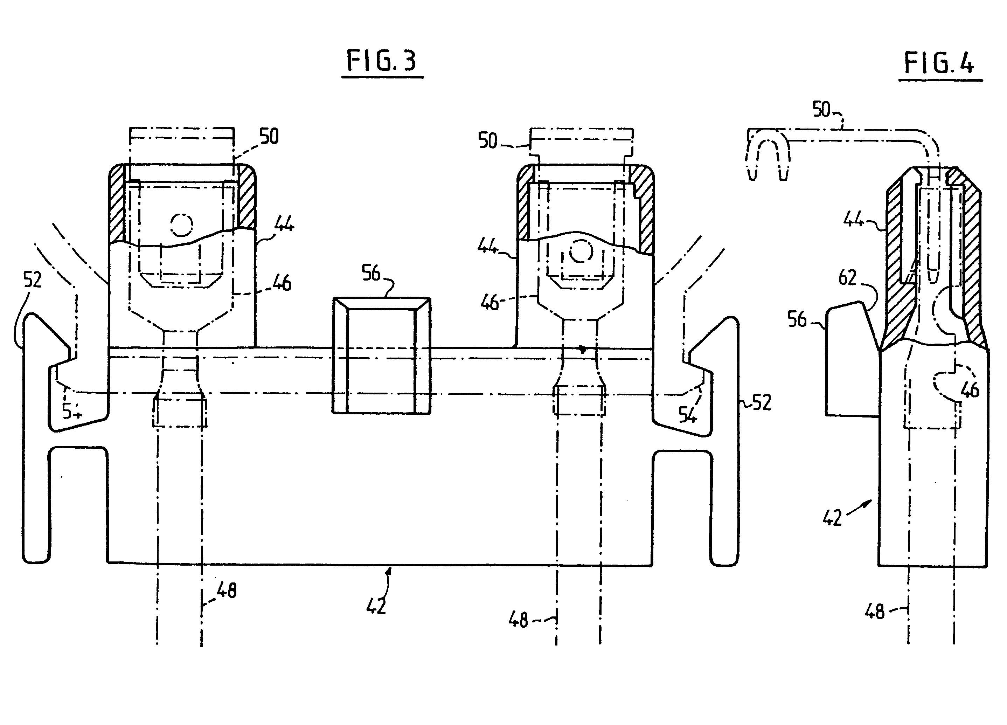

La paroi cylindrique du logement 26 comprend en outre une ouverture 40, radiale par rapport à l'axe de rotation 20 du moteur, formant passage d'un connecteur 42 à deux branches parallèles tubulaires 44 dans lesquelles sont montées fixement des cosses femelles 46 (représentées en trait fantôme dans les figures 3 et 4) reliées extérieurement à des conducteurs 48 et recevant des cosses mâles 50 fixées sur la cage 12 du moteur 10, lorsque le connecteur 42 est introduit dans l'orifice 40 de la paroi cylindrique du logement 26.

Le connecteur 42 comprend également des branches larérales 52 formant crochets, coopérant par clipsage ou encliquetage élastique avec un rebord 54 formé sur la face extérieure de la paroi cylindrique du longement 26, autour de l'orefice 40 de passage du connecteur 42. Ces pattres 52 permettent de fixer amoviblement le connecteur sur le boîtier 24 par encliquetage élastique sur le rebord 54 à la fin de la course d'introduction du connecteur 42 dans l'orifice 40.

Le connecteur 42 comprend encore une patte 56 formée en saillie sur une des ses faces latérales et s'étendant dans la même direction que les branches 44 du connecteur, de façon à être reçue dans une encoche 58 formée dans une nervure longitudinale 60 de la cage 12 du moteur. Cette nervure 60 s'étend dans un plan passant par l'axe 20 de rotation du moteur et l'orientation générale de la patte 56 du connecteur est sensiblement radiale, quand le connecteur est en place sur le boîtier 24.

L'une des faces avant ou arrière de la patte 56, par exemple sa face arrière 62 par rapport à la roue 14, est oblique, et le bord correspondant 64 de l'encoche 58 est parallèle à cette face oblique, ce qui facilite l'introduction de la patte 56 dans l'encoche 58 malgré une dispersion de cotes résultant de fabrications en grande série.

Comme on le voit dans les figures 3 et 4, la patte 56 est formée en saillie sur l'une des faces du connecteur 42 et l'orifice 40 de passage du connecteur, formé dans la paroi cylindrique du logement 26 du moteur dans le boîtier 24, comprend une découpe ayant une forme conjuguée de celle de la patte 56 et recevant cette patte lorsque le connecteur est monté sur le moteur. Ainsi, dans le cas d'un moteur à courant continu, on assure que les cosses 50 du moteur sont reliées de façon correcte aux bornes positive et négative d'une source de courant continu, par l'intermédiaire du connecteur, et que le moteur ne peut être raccordé à l'envers à cette source de courant.

De préférence, le connecteur 42 ferme de façon sensiblement étanche l'orifice 40 lorsqu'il est monté en place sur le moteur.

Lorsque le moteur 10 est monté par ammanchement à force dans le logement 26 du boîtier 24, et positionné par butée de la bague 32 sur l'extrémité 36 des nervures 34, il suffit d'introduire le connecteur 42 dans l'orifice de passage 40 pour, d'une part, relier le moteur à sa source d'alimentation électrique et, d'autre part, assurer la retenue du moteur dans le boîtier 24, en raison de l'engagement de la patte 56 dans l'encoche 58 précitée. Cette retenue du moteur dans le boîtier 24 s'effectue sans transmission d'une contrainte de déformation à la cage 12 du moteur. En outre, la retenue du moteur dans le boîtier 24 par l'intermédiaire du connecteur 42 évite la transmission de bruit à l'extérieur du boîtier, qui se produisait dans la technique antérieure. En général, la patte 56 sert uniquement d'organe de sécurité empêchant que le moteur sorte de son logement du boîtier, et il n'est pas nécessaire que l'extrémité de cette patte soit en contact étroit avec les bords de l'encoche. Il suffit que la patte 56 soit engagée dans l'encoche 58 pour que le moteur ne puisse être extrait du boîtier.

**Revendications**

1. Dispositif de retenue d'un moteur électrique dans un boîtier, ce moteur comprenant une cage ou bâti (12) de support du stator et de guidage de l'arbre (14) du moteur, le boîtier (24) comprenant des moyens (30, 34) de centrage et de butée coopérant avec la cage (12) pour le positionnement du moteur (10) dans le boîtier (24), une paroi du boîtier comprenant un orifice (40) de passage d'un connecteur (42) propre à être engagé sur deux cosses (50) d'alimentation électrique du moteur, qui sont fixées sur la cage (12), caractérisé en ce que le connecteur (42) comprend une patte (56) en saillie propre à être reçue dans une encoche (58) d'une partie de la cage (12) du moteur et qui forme, quand le connecteur (42) est engagé sur les cosses (50) à travers l'orifice (40) du boîtier, un organe de retenue du moteur (10) dans le boîtier (24).

2. Dispositif selon la revendication 1, caractérisé en ce que le connecteur (42) comprend également deux branches latérales (52) formant crochets et coopérant par clipsage ou encliquetage élastique avec un rebord (54) formé sur ladite paroi du boîtier (24) autour de l'orifice (40) de passage du connecteur, pour fixation de ce dernier sur le boîtier.

3. Dispositif selon la revendication 1 ou 2, caractérisé en ce que ladite encoche (58) est formée dans une nervure (60) de la cage du moteur.

4. Dispositif selon la revendication 3, caractérisé en ce que la nervure (60) s'étend dans un plan passant par l'axe (20) de rotation du moteur.

5. Dispositif selon l'une des revendications précédentes, caractérisé en ce que l'orifice (40) de passage du connecteur est orienté radialement par rapport à l'axe (20) de rotation du moteur.

6. Dispositif selon l'une des revendications précédentes, caractérisé en ce que la patte (56) du connecteur (42) comprend une face (62) oblique, parallèle à un bord oblique (64) de ladite encoche (58).

7. Dispositif selon l'une des revendications précédentes, caractérisé en ce que le connecteur (42) monté dans l'orifice (40) de la paroi du boîtier ferme cet orifice de façon sensiblement étanche.

8. Dispositif selon l'une des revendications précédentes, caractérisé en ce que ladite patte (56) est en saillie sur une face du connecteur (42) et en ce que le bord de l'orifice (40) de passage du connecteur comprend une découpe de forme correspondante, recevant cette patte en saillie.

## Patentansprüche

1. Vorrichtung zur Befestigung eines elektrischen Motors in einem Gehäuse, wobei dieser Motor folgendes enthält: ein Gestell oder einen Rahmen (12) zur Abstützung des Stators und zur Führung der Welle (14) des Motors, das Gehäuse (24) mit Zentrier- und Anschlagvorrichtungen (30, 34), die mit dem Gestell (12) zusammenwirken, um den Motor (10) im Gehäuse (24) zu positionieren, wobei eine Wand des Gehäuses eine Durchtrittsöffnung (40) für einen Verbinder (42) enthält, der an zwei Stromanschlussschuhen (50) für den Motor einrasten kann, die am Gestell (12) befestigt sind, dadurch gekennzeichnet, dass der Verbinder (42) eine vorspringende Klammer (56) enthält, die in eine Aussparung (58) in einem Teil des Motorgestells (12) eingreifen kann und die, wenn der Verbinder (42) durch die Öffnung (40) des Gehäuses in den Stromanschlussschuhen (50) einrastet, ein Element zur Befestigung des Motors (10) im Gehäuse (24) bildet.

2. Vorrichtung gemäss Anspruch 1, dadurch gekennzeichnet, dass der Verbinder (42) auch zwei seitliche Abzweigungen (52) enthält, die Haken bilden und elastisch in eine Randleiste (54) eingehakt oder eingesetzt werden können, die an der besagten Wand des Gehäuses (24) rund um die Durchtrittsöffnung (40) des Verbinders ausgebildet ist, um letzteren am Gehäuse zu befestigen.

3. Vorrichtung gemäss Anspruch 1 oder 2, dadurch gekennzeichnet, dass die besagte Aussparung (58) in einer Rippe (60) des Motorgestells ausgebildet ist.

4. Vorrichtung gemäss Anspruch 3, dadurch gekennzeichnet, dass sich die Rippe (60) in einer Ebene erstreckt, die durch die Drehachse (20) des Motors hindurch verläuft.

5. Vorrichtung gemäss einem der vorangegangenen Ansprüche, dadurch gekennzeichnet, dass die Durchtrittsöffnung (40) des Verbinders im Verhältnis zur Drehachse (20) des Motors radial ausgerichtet ist.

6. Vorrichtung gemäss einem der vorangegangenen Ansprüche, dadurch gekennzeichnet, dass die Klammer (56) des Verbinders (42) eine schräge Fläche (62) enthält, die parallel zu einer schrägen Kante (64) der besagten Aussparung (58) verläuft.

7. Vorrichtung gemäss einem der vorangegangenen Ansprüche, dadurch gekennzeichnet, dass der in der Öffnung (40) der Wandung des geschlossenen Gehäuses angebrachte Verbinder (42) diese Öffnung auf im wesentlichen dichte Weise verschliesst.

8. Vorrichtung gemäss einem der vorangegangenen Ansprüche, dadurch gekennzeichnet, dass die besagte Klammer (56) an einer Fläche des Verbinders (42) übersteht und dass die Kante der Durchtrittsöffnung (40) des Verbinders einen Ausschnitt von entsprechender Form zur Aufnahme dieser vorspringenden Klammer enthält.

## Claims

1. A device for retaining an electric motor in a housing, said motor comprising a cage or frame (12) supporting the stator and guiding the shaft (14) of the motor, the housing (24) including centering and abutment means (30, 34) co-operating with the cage (12) for positioning the motor (10) in the housing (24), a wall of the housing including an orifice (40) for passing a connector (42) suitable for being engaged on two electricity feed terminals (50) of the motor, which terminals are fixed to the cage (12), characterized in that the connector (42) includes a projecting lug (56) suitable for being received in a notch (58) of a portion of the motor cage (12) and which, when the connector (42) is engaged on the terminals (50) through the orifice (40) of the housing, constitutes a member for retaining the motor (10) in the housing (24).

2. A device according to claim 1, characterized in that the connector (42) also includes two side arms (52) constituting hooks and co-operating by resilient snap-fastening or clipping with a rim (54) formed on said wall of the housing (24) around the connector passing orifice (40), for the purpose of fixing the connector to the housing.

3. A device according to claim 1 or 2, characterized in that said notch (58) is formed in a rib (60) of the motor cage.

4. A device according to claim 3, characterized in that the rib (60) lies in a plane passing through the axis of rotation (20) of the motor.

5. A device according to any preceding claim, characterized in that the connector-passing orifice (40) is oriented radially relative to the axis of rotation (20) of the motor.

6. A device according to any preceding claim, characterized in that the lug (5() of the connector (42) includes a sloping face (62) which is parallel to a sloping edge (64) of said notch (58).

7. A device according to any preceding claim, characterized in that the connector (42) when mounted in the orifice (40) through the wall of the housing closes said orifice in a substantially sealed manner.

8. A device according to any preceding claim, characterized in that said lug (56) projects from a face of the connector (42), and in that the edge of the connector-passing orifice (40) includes a cut-out of corresponding shape for receiving said projecting lug.

# FIG.1

# FIG.2

EP 0 188 930 B1

# FIG. 3

# FIG. 4

EP 0 188 930 B1